# FASCICULE DE BREVET EUROPEEN

(11) **EP 1 595 588 B1**
(45) Date de publication et mention de la délivrance du brevet: **29.07.2009**
(21) Numéro de dépôt: 05300375.2
(22) Date de dépôt: 13.05.2005
(51) Int. Cl.: B01D 24/14, B01D 24/00, C02F 3/04, C02F 3/10

(54) **Dispositif de filtration combinée de volume reduit**
Kombinierte, platzsparende Filtrationsvorrichtung
Combined compact filter device

(30) Priorité: 13.05.2004 FR 0450930
(43) Date de publication de la demande: 16.11.2005
(73) Titulaire: Ouest Environnement, 17160 Matha (FR)
(72) Inventeur: REAU, Gérard, 16130, ARS (FR)
(74) Mandataire: Fantin, Laurent

(56) Documents cités:
- EP-A- 0 672 440
- WO-A-00/50142
- AT-B- 391 125
- FR-A- 2 755 620
- FR-A- 2 801 805
- US-A- 4 765 892
- US-A- 6 024 870
- US-A1- 2003 038 067

## Description

La présente invention concerne un dispositif de filtration combinée, de volume réduit pour une même capacité de traitement.

Dans le cas où une habitation ou un groupe d'habitations ne dispose pas de possibilités de raccordement au réseau de tout-à-l'égout, il est généralement disposé des moyens autonomes de traitement des eaux usées incluant une fosse septique.

Une fosse septique comprend une enceinte fermée comportant une entrée ouverte vers le bas de l'enceinte et une sortie en partie haute, à déversement en sorte de conserver un volume fluide pour la quasi-totalité du volume de l'enceinte.

Des microorganismes sont introduits dans cette enceinte et se développent de façon quasi autonome tout en permettant de digérer les matières organiques.

L'eau rejetée à la sortie de la fosse, sous réserve d'un bon dimensionnement et d'un bon fonctionnement, est censée être exempte de matière organique. L'eau doit pouvoir être ensuite répandue sur une surface donnée en sorte de la voir absorbée par le sol.

En réalité, les matières organiques sont en partie traitées mais il subsiste une part importante de l'ordre de 50% de matières solides organiques pour une part qu'il est nécessaire de traiter par digestion complémentaire ou filtration mécanique avant que l'eau ne puisse être épandue et absorbée.

En complément, il est souvent prévu un filtre à sable disposé en série avec la fosse septique et assurant le traitement complémentaire nécessaire évoqué ci-avant.

De tels filtres à sable assurent une filtration mécanique et les bactéries se développent en son sein pour transformer la matière organique subsistante.

Néanmoins, si de tels filtres à sable sont peu coûteux à la mise en place, ils posent différents problèmes. Le premier est la nécessité de disposer d'une grande surface au sol car le rendement est faible et il faut une grande surface pour une faible capacité de traitement.

De plus, de tels filtres se colmatent rapidement et perdent de leur efficacité rapidement engendrant des changements réguliers de l'ordre de 3 à 5 ans.

Lors de chaque changement, il faut retirer la couche de terre végétale généralement rapportée sur le filtre à sable, il faut retirer le volume de sable dans son ensemble pour le mettre en décharge. En plus des inconvénients liés au terrassement, il faut ajouter le coût en décharge dont on sait qu'il est proportionnel au volume et de plus en plus élevé.

Quant aux bactéries, elles sont de type aérobie et se développent mieux dans un milieu bien aéré, ce qui n'est pas le cas du sable.

On connaît aussi le principe des diffuseurs septiques notamment ceux qui sont décrits dans la demande de brevet français N°2 730 512. Cette demande décrit un mode de réalisation très particulier des plaques set de leur agencement mais une infinité de modes de réalisation peut être fabriquée.

De tels diffuseurs sont d'une grande efficacité car ils comportent des supports conférant une grande surface d'échange avec une très bonne efficacité, ils limitent très fortement le colmatage, ils servent de milieu support au développement des microorganismes, ils sont recyclables dans leur ensemble, ils présentent une longue durée de fonctionnement et ils sont aisément manipulables sous forme de blocs modulaires, juxtaposables.

Des plaques sont pourvues de bossages adaptés constituant ainsi des supports de géotextiles, ménageant ainsi des canaux de circulation et des alvéoles nécessaires pour le développement aérobie des microorganismes.

US 6,024,870 décrit un dispositif de filtration d'eaux usées, comprenant un bac comportant des premier moyens de filtration modulaires et des second moyens de filtration avec un volume de sable.

La présente invention vise à proposer un dispositif de filtration complémentaire associé à une station de traitement telle qu'une fosse septique, qui est peu encombrant, qui limite le volume de sable ou de sable ou de zéolite nécessaire, qui présente une longue durée de vie et qui fonctionne avec un rendement important ce qui limite son volume et donc l'encombrement au sol nécessaire pour son installation.

De ce fait, les frais d'entretien sont réduits, les coûts de mise en décharge sont également limités et le fonctionnement est garanti à son niveau optimal.

Le dispositif est maintenant décrit en détail suivant un mode de réalisation particulier, non limitatif, et des dessins annexés permettent à travers les figures représentées d'illustrer la description qui va suivre.

Les différentes figures représentent :
- figure 1 : une vue en perspective du dispositif selon la présente invention,
- figure 2 : une vue en coupe longitudinale du dispositif selon la figure 1, et

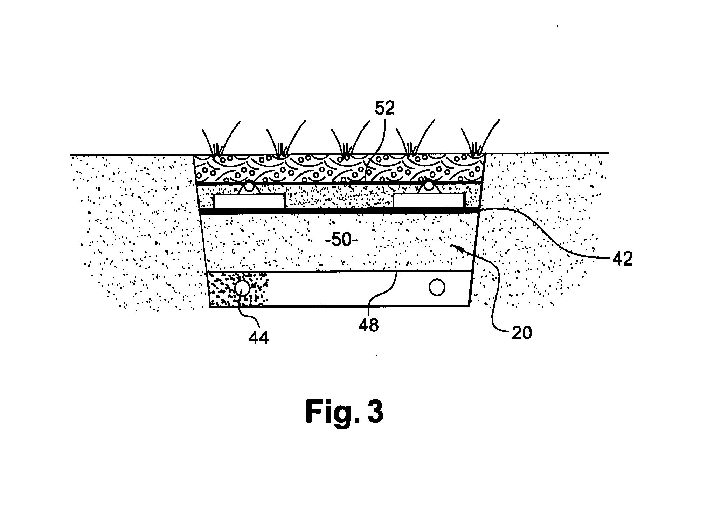

- figure 3 : une vue en coupe transversale du dispositif selon la figure 1.

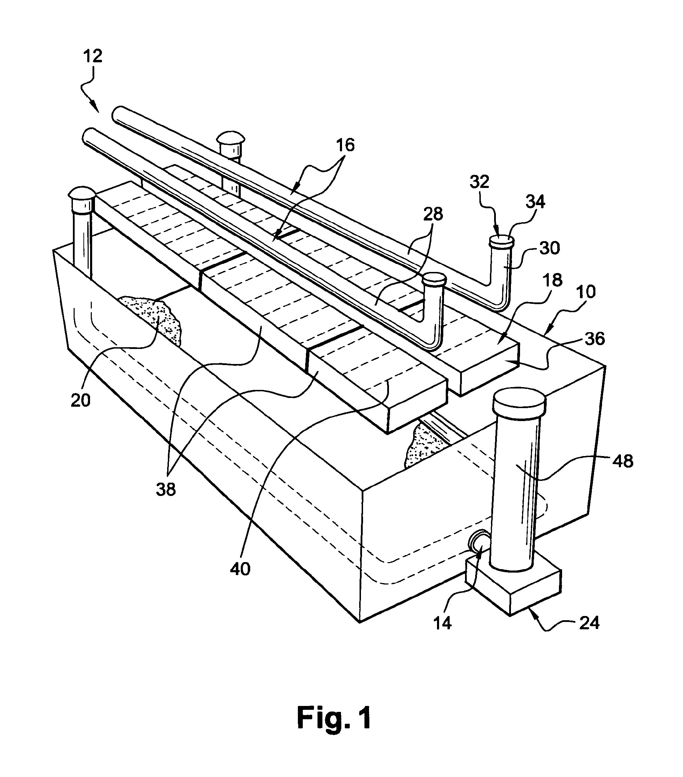

Sur la figure 1, on a représenté un contenant 10 avec une entrée 12 en partie haute, une sortie 14 en partie basse, des moyens 16 de répartition, des premiers moyens 18 de filtration, des seconds moyens 20 de filtration et des moyens 22 de collecte ainsi qu'une évacuation 24.

Le contenant 10 est un bac généralement en matière polymère du type PVC (polychlorure de vinyle) ou polyéthylène, de forme sensiblement parallélépipédique.

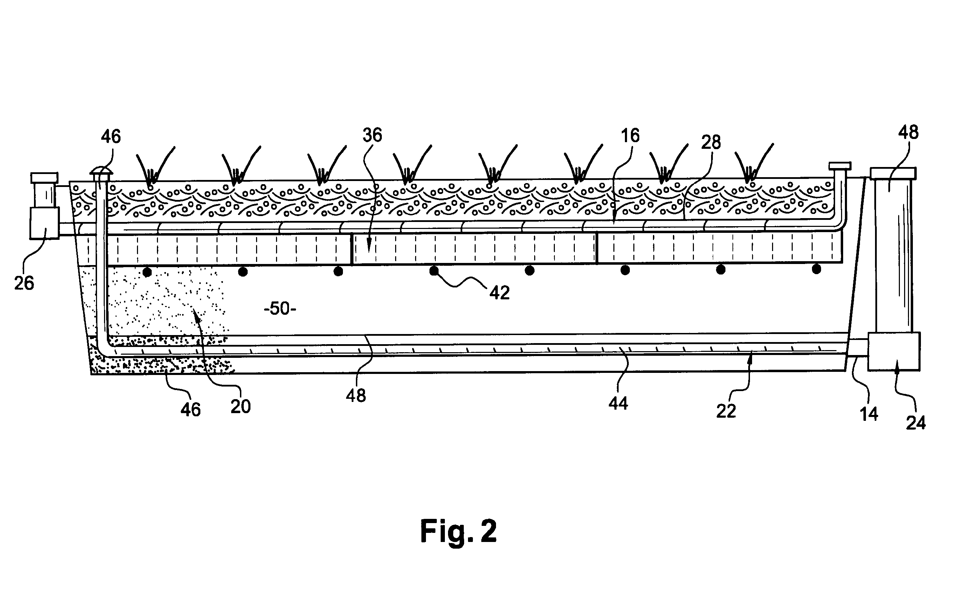

Ce bac est équipé, dans le mode de réalisation représenté, d'une entrée 12 équipée d'un regard 26 de répartition, visible sur la figure 2, qui reçoit les eaux d'une fosse septique, non représentée. Ce regard peut avantageusement être du type à auget basculant linéaire. Ce regard alimente deux canalisations 28 perforées ou munies de fentes dont les extrémités 30 sont coudées vers le haut pour constituer des accès 32 obturés avec des bouchons 34 amovibles.

Les premiers moyens 18 de filtration comprennent des modules 36 de filtration comportant chacun plusieurs sous-modules 38.

Ces sous-modules 38 sont équipés de goulottes de surverse pour alimenter la totalité de la surface des modules 40 parallèles entourées d'une matière filtrante telle qu'un géotextile. Les modules sont positionnés immédiatement sous les canalisations 28 de façon à recevoir directement, par gravité, les eaux issues du regard de répartition, notamment celui du type à auget basculant.

Ces modules reposent sur des moyens supports 42, en l'occurrence des barres transversales, solidaires des parois longitudinales.

En partie inférieure, il est prévu les moyens 22 de collecte.

Ces moyens de collecte comprennent des drains 44 perforées ou munis de fentes, reliés à une prise d'air 46 à une extrémité, en l'occurrence, au droit de l'entrée 12 comme cela est représenté et tout à fait visible sur la figure 2.

Les autres extrémités sont reliées à la sortie 24 qui débouche dans un regard 48 de réception.

Ce regard est soit relié ensuite à un réservoir naturel, soit équipé de canalisations d'épandage directement sur le terrain. Si la pente est insuffisante ou en fonction de la hauteur de la nappe phréatique, il est possible de prévoir une pompe de relevage pour rendre possible ou faciliter cet épandage.

La mise en service du dispositif consiste à positionner le bac vide dans une excavation au sol, ménagée à cet effet.

Les moyens 22 de collecte sont positionnés en fond de bac et les drains 44 de collecte sont noyés dans une couche 46 drainante constituée de graviers par exemple.

Sur cette couche drainante, un revêtement 48 en géotextile assure une séparation mécanique tout en laissant passer l'eau.

Un volume 50 de sable ou de zéolite est réparti sur ce revêtement en géotextile pour constituer les seconds moyens 20 de filtration qui se trouvent ainsi sous les premiers moyens de filtration, en superposition. Le revêtement en géotextile peut être remplacé ou complété par une géogrille.

Ce volume 50 de sable ou de zéolite est complété jusqu'à hauteur des moyens supports 42 qui en assure la limite visuelle.

Une fois les barres 42 transversales de support en place, les modules 36 de filtration sont positionnés, par juxtaposition, en alignement.

Les canalisations 28 sont positionnées et fixées sur les modules 36.

Un nouveau revêtement 52 en géotextile est disposé sur les canalisations et modules afin de pouvoir compléter le bac avec de la terre végétale par exemple ou des graviers ou tout autre élément de finition.

Un tel agencement est particulièrement facile à mettre en oeuvre et s'avère être très compact.

La qualité de l'eau en sortie du dispositif est telle que l'eau peut alimenter directement un réservoir de plein air ou être épandue sur des terres adjacentes.

Pour donner un ordre de grandeur, un dispositif pour assurer le traitement des eaux usées issues d'une fosse septique pour une famille de 5 personnes comprend un bac de 1 m de hauteur, 2 m de largeur et 3,5 m de longueur.

On constate que la surface au sol est extrêmement réduite.

Deux modules juxtaposés, totalisant une surface d'échange de 4 m², constituent dans ce cas les premiers moyens de filtration.

Les seconds moyens de filtration comprennent du sable lavé de granulométrie 0,8 à 2/4 ou de la zéolite sur une hauteur de 0,50 m. Cette hauteur est aisément visible puisqu'elle correspond à la base des moyens supports 42.

Conséquence de la présence des premiers moyens de filtration amont, de la faible surface et de la hauteur réduite, on constate que le volume de sable ou de zéolite est réduit, de l'ordre de 3,5 m³ comparé avec les 25 m³ nécessaires pour un filtre uniquement à sable de l'art antérieur.

Les graviers de la couche drainante des moyens de collecte ont une granulométrie 15/30, de préférence.

Un tel bac doit être mis en place suivant les règles de l'art avec une pente adaptée pour chacun des réseaux de canalisation, pour les modules afin de permettre une circulation gravitaire.

## Revendications

1. Dispositif de filtration combinée d'eaux usées, comprenant une entrée (12) d'eau à traiter, des moyens (16) de répartition, un bac (10) comportant des premiers moyens (18) de filtration et des seconds moyens (20) de filtration avec un volume (50) de sable ou de zéolite, des moyens (22) de collecte, et une sortie (14) d'eau claire, **caractérisé en ce que** les premiers moyens (18) de filtration comprennent des modules (36) de filtration comportant chacun plusieurs sous-modules (38), ces sous-modules (38) étant équipés de plaques (40) parallèles entourées d'une matière filtrante en géotextile et de goulottes de surverse pour alimenter la totalité de la surface desdits modules, lesdits modules (36) étant superposés à la surface desdits seconds moyens (20) de filtration de façon à permettre un écoulement de l'eau filtrée par ces modules (36) vers lesdits seconds moyens (20) de filtration.

2. Dispositif de filtration combinée selon revendication 1, **caractérisé en ce qu'**il comprend des moyens (42) supports des premiers moyens (18) de filtration liés au bac.

3. Dispositif de filtration combinée selon l'une quelconque des revendications précédentes, **caractérisé en ce que** les moyens (16) de répartition comprennent un regard (26) de répartition et au moins une canalisation (28) perforée ou munie de fentes dont les extrémités (30) sont coudées vers le haut pour constituer des accès (32) obturés avec des bouchons (34) amovibles.

4. Dispositif de filtration selon la revendication 3, **caractérisé en ce que** le regard est à auget linéaire basculant.

5. Dispositif de filtration combinée selon l'une quelconque des revendications précédentes, **caractérisé en ce que** les moyens (22) de collecte comprennent au moins un drain (44) de collecte noyé dans une couche (46) drainante.

6. Dispositif de filtration combinée selon l'une quelconque des revendications précédentes, **caractérisé en ce qu'**il comprend un revêtement (52) en géotextile disposé au-dessus des moyens (16) de répartition et un revêtement (48) en géotextile disposé au-dessus des moyens (22) de collecte.

7. Dispositif de filtration combinée selon la revendication 6, **caractérisé en ce que** le revêtement (48, 52) en géotextile est complété ou remplacé par une géogrille.

## Claims

1. A combined filtration device for waste water, comprising an inlet (12) for water to be treated, distribution means (16), a tank (10) comprising first filtration means (18) and second filtration means (20) with a volume (50) of sand or zeolite, collection means (22), and a clear-water outlet (14), **characterised in that** the first filtration means (18) comprises filtration modules (36) each comprising several sub-modules (38), these sub-modules (38) being equipped with parallel plates (40) surrounded by a geotextile filtration material and overflow spouts for feeding the whole of the surface of said modules, said modules (36) being superposed on the surface of said second filtration means (20) so as to allow a flow of filtered water through these modules (36) to said second filtration means (20).

2. A combined filtration device according to claim 1, **characterised in that** it comprises means (42) for supporting the first filtration means (18) connected to the tank.

3. A combined filtration device according to any one of the preceding claims, **characterised in that** the distribution means (16) comprise a distribution port (26) and at least one pipe (28) that is perforated or provided with slots, the end (30) of which is angled upwards in order to provide an access (33) blocked with a removable plug (34).

4. A filtration device according to claim 3, **characterised in that** the port has a linear tipping bucket.

5. A combined filtration device according to any one of the preceding claims, **characterised in that** the collection means (22) comprises at least one collection drain (44) embedded in a draining layer (46).

6. A combined filtration device according to any one of the preceding claims, **characterised in that** it comprises a geotextile covering (52) disposed above the distribution means (16) and a geotextile covering (48) disposed above the collection means (22).

7. A combined filtration device according to claim 6, **characterised in that** the geotextile covering (48, 52) is supplemented or replaced by a geogrille.

## Patentansprüche

1. Vorrichtung zur kombinierten Filtration von Abwasser, umfassend einen Einlass (12) für das aufzubereitende Wasser, Verteilungsmittel (16), eine erste Filtrationsmittel (18) und zweite Filtrationsmittel (20) mit einem Volumen (50) Sand oder Zeolith aufweisende Wanne (10), Auffangmittel (22), und einen Ausgang (14) für das klare Wasser, **dadurch gekennzeichnet, dass** die ersten Filtrationsmittel (18) Filtrationsmodule (36) umfassen, welche jeweils mehrere Untermodule (38) aufweisen, wobei diese Untermodule (38) mit parallelen Platten (40) ausgestattet sind, die von einem filternden Material aus Geotextil und von Überlaufrinnen zur Versorgung der gesamten Fläche der Module umgeben sind, wobei die Module (36) an der Oberfläche der zweiten Filtrationsmittel (20) derart diese überlagernd angeordnet sind, dass filtriertes Wasser durch diese Module (36) zu den zweiten Filtrationsmitteln (20) fließen kann.

2. Vorrichtung zur kombinierten Filtration nach Anspruch 1, **dadurch gekennzeichnet, dass** sie Mittel (42) umfasst, die die mit der Wanne verbundenen ersten Filtrationsmittel (18) abstützen.

3. Vorrichtung zur kombinierten Filtration nach einem der vorstehenden Ansprüche, **dadurch gekennzeichnet, dass** die Verteilungsmittel (16) einen Verteilungsschacht (26) und mindestens ein perforiertes oder mit Spalten versehenes Rohrnetz (28) umfassen, wobei die Enden (30) des Rohrnetzes nach oben gebogen sind, um Zugänge (32) zu bilden, die mit abnehmbaren Stöpseln (34) verschlossen werden.

4. Filtrationsvorrichtung nach Anspruch 3, **dadurch gekennzeichnet, dass** der Schacht einen linearen, kippbaren Trog aufweist.

5. Vorrichtung zur kombinierten Filtration nach einem der vorstehenden Ansprüche, **dadurch gekennzeichnet, dass** die Auffangmittel (22) mindestens einen Auffangdrän (44) umfassen, der in einer dränierenden Schicht (46) eingebettet ist.

6. Vorrichtung zur kombinierten Filtration nach einem der vorstehenden Ansprüche, **dadurch gekennzeichnet, dass** sie eine oberhalb der Verteilungsmittel (16) angeordnete Belegung (52) aus Geotextil und eine oberhalb der Auffangmittel (22) angeordnete Belegung (48) aus Geotextil umfasst.

7. Vorrichtung zur kombinierten Filtration nach Anspruch 6, **dadurch gekennzeichnet, dass** die Belegung (48, 52) aus Geotextil durch ein Geogitter ergänzt oder ersetzt wird.
